# EUROPEAN PATENT SPECIFICATION

(11) **EP 1 066 714 B1**
(45) Date of publication and mention of the grant of the patent: **20.10.2010**
(21) Application number: 99908615.0
(22) Date of filing: 02.03.1999
(51) Int. Cl.: H04M 3/50, H04L 12/58

(54) **INTERNET AND TELEPHONY BASED MESSAGING SYSTEM**
NACHRICHTENSYSTEM BASIERT AUF INTERNET UND TELEFONIE
SYSTEME DE MESSAGERIE BASE SUR L'INTERNET ET LA TELEPHONIE

(30) Priority: 02.03.1998 US 33335
(43) Date of publication of application: 10.01.2001
(73) Proprietor: Parus Holdings, Inc., Bannockburn, IL 60015 (US)
(72) Inventor: KURGANOV, Alex, Buffalo Grove, IL 60089 (US)
(74) Representative: Grünecker, Kinkeldey, Stockmair & Schwanhäusser Anwaltssozietät
(86) International application number: PCT/US1999/004522
(87) International publication number: WO 1999/045691

(56) References cited:
- WO-A-96/09710
- WO-A-98/23058
- US-A- 5 608 786

## Description

The present invention relates to a telecommunication system, and more specifically, the present invention relates to a network system based on internet, computer and telecommunication standards, utilizing internet and computer technology, a graphical user interface, integrated telecommunication applications and interactive voice recognition technology, facilitating the computation and telecommunication of voice and electronic data.

Individuals and business people seek to communicate with each other, obtain useful information, interact commercially and entertain themselves in an increasingly mobile society. In order to fulfill these needs, one requires the ability to send and receive messages, access information and entertainment, conduct business transactions, organize daily schedules and stay in touch with homes and offices from almost anywhere, at any time, as easily as making a telephone call.

Continued demand for products and services that address these needs is evidenced by the increasing number of electronic devices, and the explosive growth of the internet and network services. Advances in wireless telecommunication technologies led to the development of such devices as personal digital assistants, and enabled the growth of paging and cellular telephone networks. Devices such as notebook and sub-notebook computers with modems (both wireline and wireless) have allowed mobile professionals to connect to their PCs from almost any location, as well as to access on-line information and electronic mail services while traveling worldwide.

In addition, communication and information needs have stimulated the growth of the internet, on-line networks and corporate intranets. These networks now host a variety of services such as e-mail, database searching, conferencing, electronic commerce, games, software libraries and electronic newspapers and magazines. However, despite the proliferation of communication devices and the development of the internet, on-line networks and corporate intranets, significant barriers remain to fulfilling user needs for access to and management of personal, professional and public information.

Document WO 96/09710 A describes a network-based multimedia communications system. A plurality of subscriber devices, including telephones, fax machines and computers, as well as public messaging systems and private networks of companies.are connected to a central network via hubs. A plurality of different communication media is enabled. The hubs include the necessary technical infrastructure for properly routing the messages, and also for performing media translations. Further, mailing list distribution of messages is enabled.

US-A-5 608 786 describes a messaging system, wherein plural types of communication devices can be connected to the internet via standard telephone connections (PSTN). Besides generic Internet access providers, the connection between PSTN and the Internet is enabled via particular network elements called "UniPost Access Nodes", which are distributed over the world. Each subscriber is associated with a particular one of the UniPost Access Nodes, but can retrieve messages directed to him from every other UniPost Access Node in a region where the subscriber currently resides. The UniPost Access Nodes further enable features of conversion between different media, such as facsimile transmissions to email, or email to speech. Further, the UniPost Access Nodes have the feature of voice notification indicating that a message has been received, through a particular subscriber via a pre-specified telephone number.

The hardware designs and software technologies which enable today's communication are complex. Information, though widely available, can be either inaccessible or accessible only by navigating through a host of phone systems, operating system platforms, databases and networks. As a result significant amounts of time and effort are required of those who use and depend on these devices, networks and services to communicate and obtain information.

The problem of accessing and processing all of the information available from communication devices, networks and services is particularly acute for mobile business professionals. Today's mobile professional, working out of the home or small office, may have a cellular phone, a pager, a computer, a fax machine, an electronic mailbox on the internet, and a voice-mail service. Whether on the road, in a plane or at the office, success for the mobile professional depends in large part on the ability to easily and quickly access, sort through and respond to the messages delivered to each of these communication devices, and to obtain information necessary to the conduct of business from proliferating networks and services.

This is achieved by the features of the independent claims.

The present invention is a network system, which is based on internet, computing and telecommunications standards, utilizing computer and internet technology, an innovative graphical user interface, integrated communication applications and interactive voice recognition technology. The present invention is a unified messaging service which will be accessible from any standard communication device (telephone, computer or internet), and will give the user intuitive voice command of personal, professional and public information.

This unified messaging service is a useful tool to those whose time and resources are limited and for whom communication is critical, such as mobile business professionals in the small office, home office market. The mobile business professional must maintain access to personal and professional information and developments, respond to customers and communicate with colleagues, family and friends at any time and from any location. The unified messaging service is designed to meet these objectives by offering a single point of access to all communications, integrated with personal information management tools and customized public content delivery.

Small office, home office professionals, most of whom do not have access to dedicated information management systems or the benefit of administrative support staff, may derive unique value from this shared network solution.

Preferred embodiments of the invention are explained below with references to the accompanying drawings in which:
Figure 1 is a functional block diagram of the hardware platform embodying the present invention;
Figure 2 is a functional block diagram of the internet platform embodying the present invention;
Figure 3 is a general application flow chart embodying the present invention;
   and
Figure 4A-4R are detailed application flow charts embodying the present invention.
Figure 5A-5B are the functional block diagrams for the computer telephony platform and network architecture embodying the present invention.
Figure 6 is the software architecture embodying the present invention.

The present invention is a network system that works, among other things, as your voice-mail system, using an 800 888 number that receives all your calls, faxes, pages and e-mail. The system provides a contact database facilitating the placing of calls, screening of calls, and tracking you down wherever you are.

Regardless of how the message was transmitted, every message is delivered to you through a single source, whether telephone, internet or computer. You can also review your latest call records and billing information and change or add to your phone listings, contact numbers and service preferences through this source.

The present invention utilizes a fault resilient redundant system, residing in two separate sites. There are multiple T-3 (45 Mbps) facilities going into each of those sites. Both sites sit on a fiber-channel fiber optic loop, which is theoretically "self healing" in case of a disaster and can route a phone call to either facility, depending on where the route is broken.

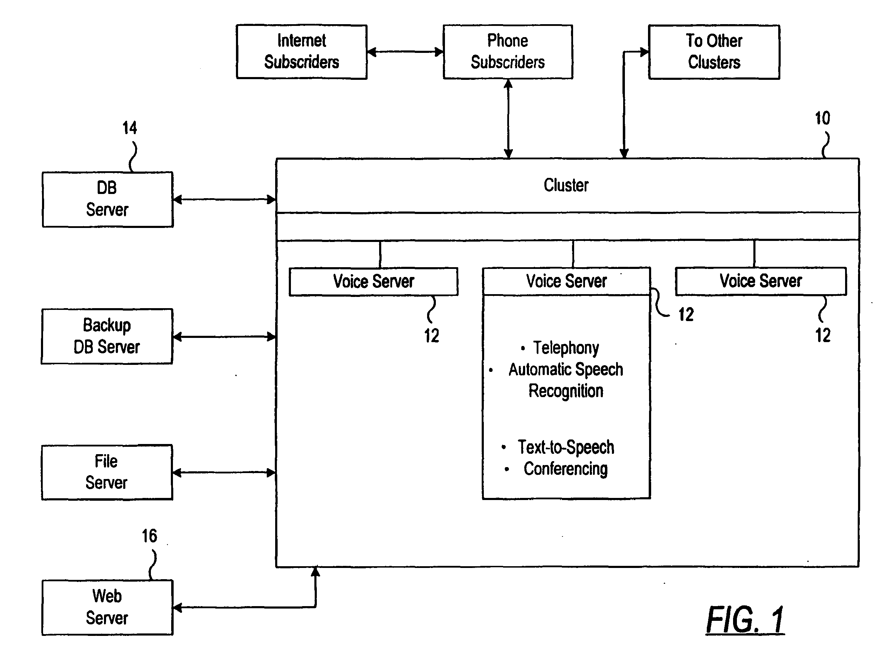

The configuration at each site is a cluster of servers. Figure 1 is a block diagram of the hardware platform showing one of these clusters 10 which consists of some voice servers 12, some mirrored Sybase database servers 14, and some web servers 16 where the web access and services are located. The computers (not shown) are 200 MHz Intel-based 1911 rackmount servers running a combination of Solaris and SCO UNIX operating systems. The voice server 12 includes certain functions, such as telephony, automatic speech recognition, text-to-speech, conferencing, etc. Subscribers are connected to these clusters by either normal telephone connections or by internet connections.

Each cluster can serve about 10,000 customers. The system is open-ended allowing for the addition of subscribers as needed. Further the design facilitates the easy addition of hardware and software.

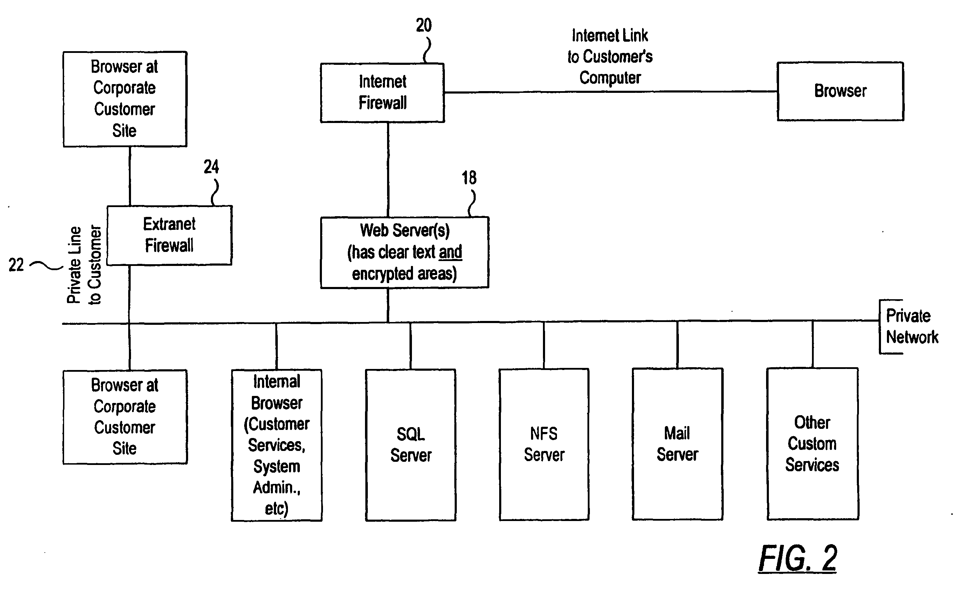

Figure 2 shows a block diagram of the internet platform. The system may be accessed via the internet instead of a normal telephone connection (voice or touchtone). The subscriber can access the web server 18 through an internet firewall 20. The subscriber merely enters the system's web site and then can access his account through a security program. Once in his account, the subscriber can access various features such as playing voice mail, reading e-mail and faxes, managing contacts and schedules, among other services. Further, the system can provide a private line 22 for corporate and other subscribers which can enter the web server 18 through an extranet firewall 24.

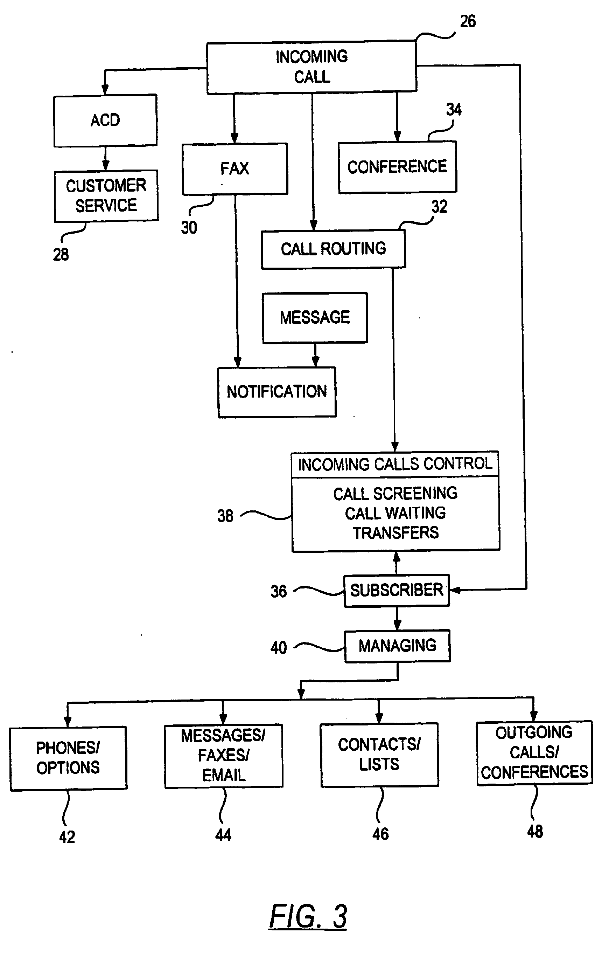

Figure 3 shows a general application flow chart for an incoming call 26 to the system. The incoming call 26 whether by telephone connection or internet connection is directed either to customer service 28 (through an automatic call distribution-ACD), fax 30, call routing 32, or conference 34 function. Call muting 32 is determined by the incoming call control 38, previously set by the subscriber, and can include a message and notification to the subscriber, call screening, call waiting, and the transfer of the call. Further, if the incoming call 26 is a subscriber 36, the system will provide additional functions to the subscriber, such as controlling incoming calls 38, including call screening, call waiting and transferring calls. The subscriber may set priorities to certain callers allowing only certain callers to reach the subscriber while all others are sent to voice-mail to record a message for playback later.

Also, the subscriber will be able to manage 40 his account. Managing 40 includes setting the options for telephone calls 42, setting the options for sending and receiving messages, faxes and e-mail 44, managing the database containing the subscriber's contacts and other lists 46, and setting the parameters for outgoing call and setting up conferences 48.

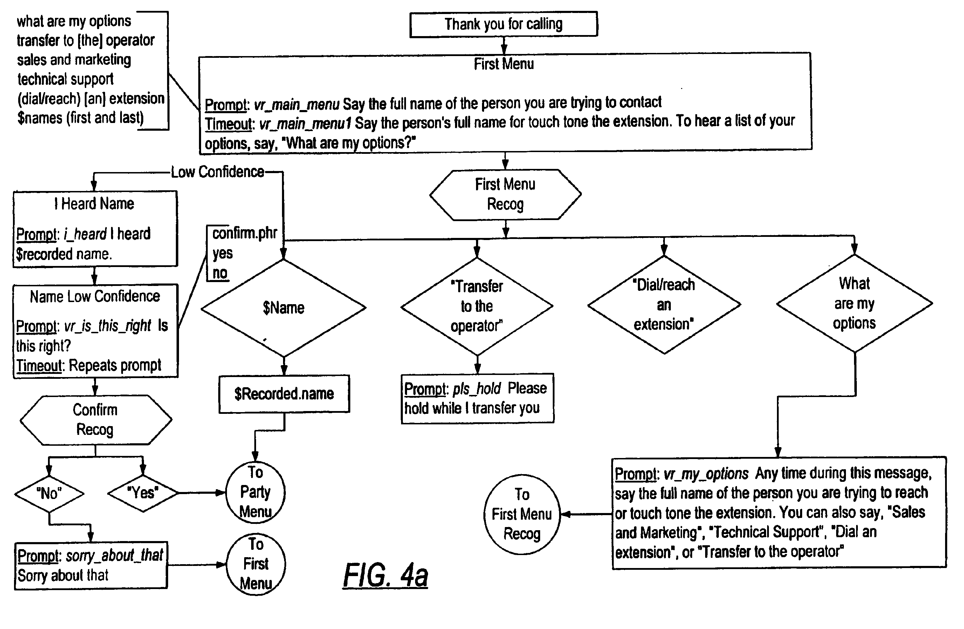

Figures 4A through 4R show a more detailed flowchart of the present invention. Figure 4A shows the First Menu encountered by a subscriber or an individual calling the system's 800 telephone number. The caller is explained the different options and then the system, if requested, attempts to recognize the subscriber or party's name or extension that the caller is trying to reach.

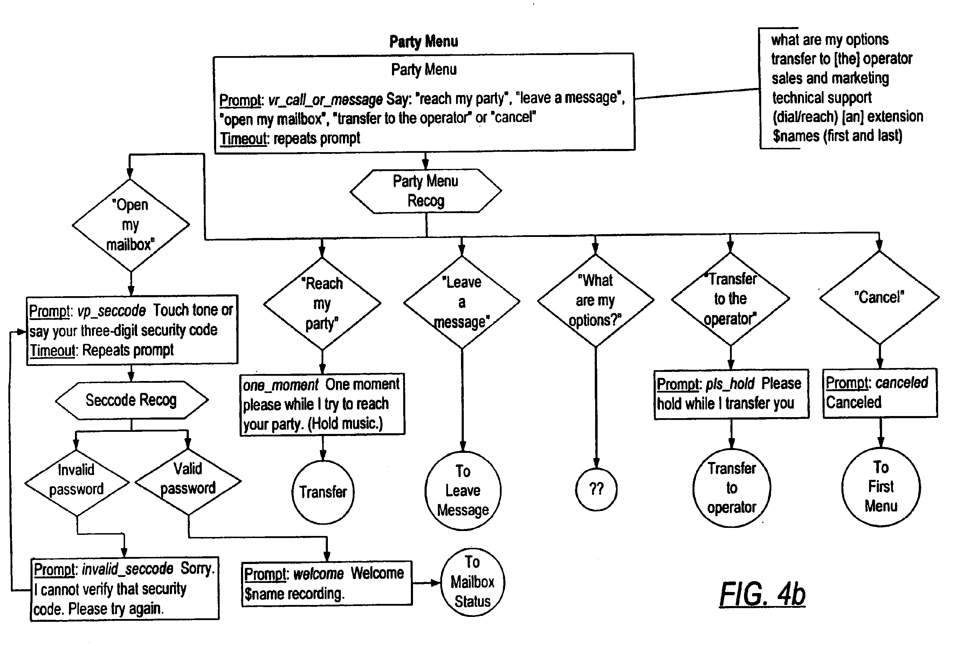

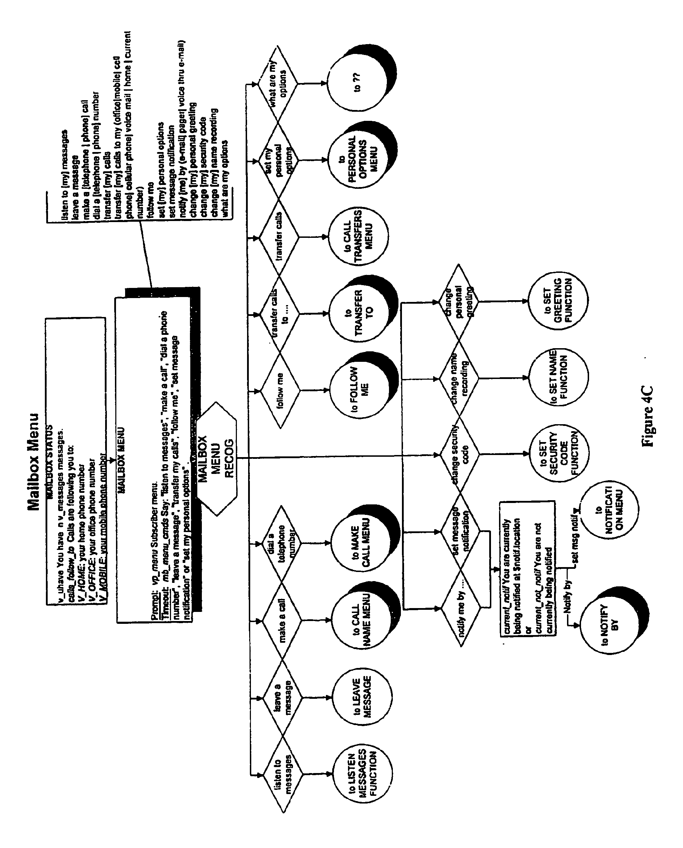

Figure 4B shows the Party Menu which allows the caller to begin the transfer to the party hr is trying to reach, leave a message, or, if the caller is a subscriber, open his mailbox. Figure 4C shows the Mailbox Menu which allows the subscriber to listen to his messages, leave a message, make a call (using the database), dial a telephone number, request the system to follow the subscriber, transfer calls, and set other personal options, including the greeting, security codes, etc.

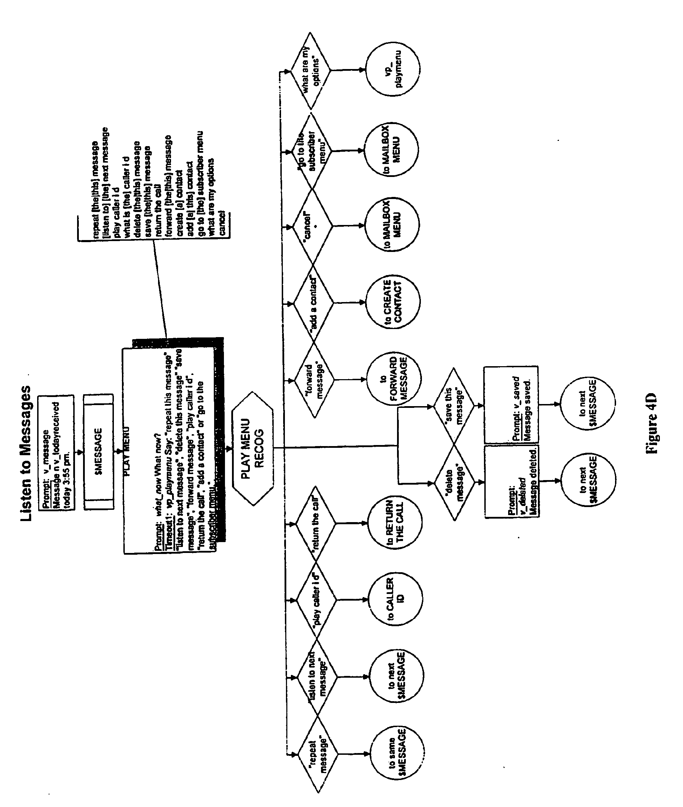

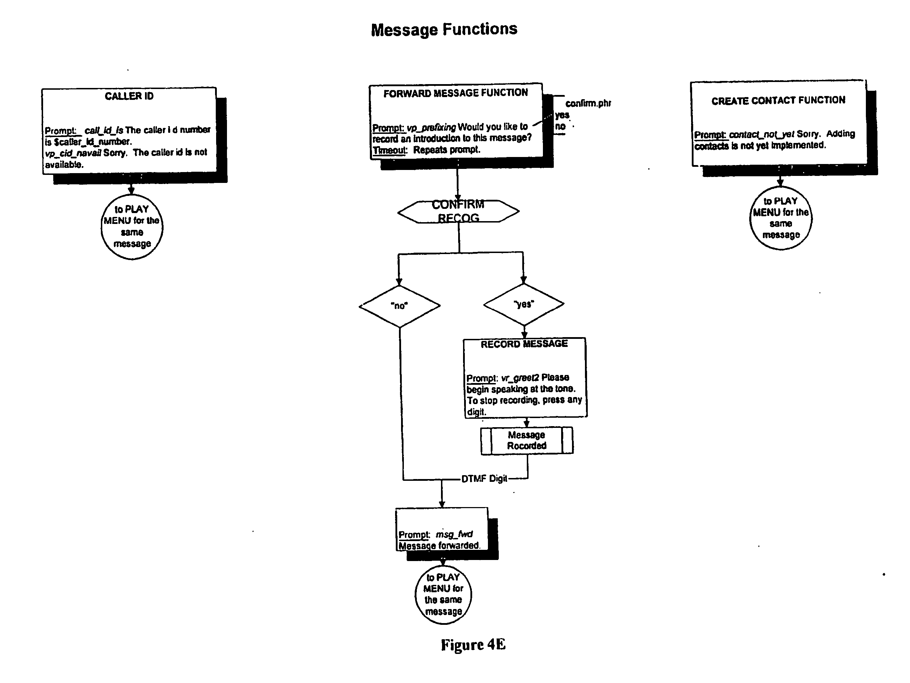

Figure 4D shows the Listen to Messages Menu which allows the subscriber to listen to, forward, or return the message, along with other options such as adding a contact, etc. Figure 4E shows the Message Menu such as forwarding the message, providing caller identification information, and updating the contact database.

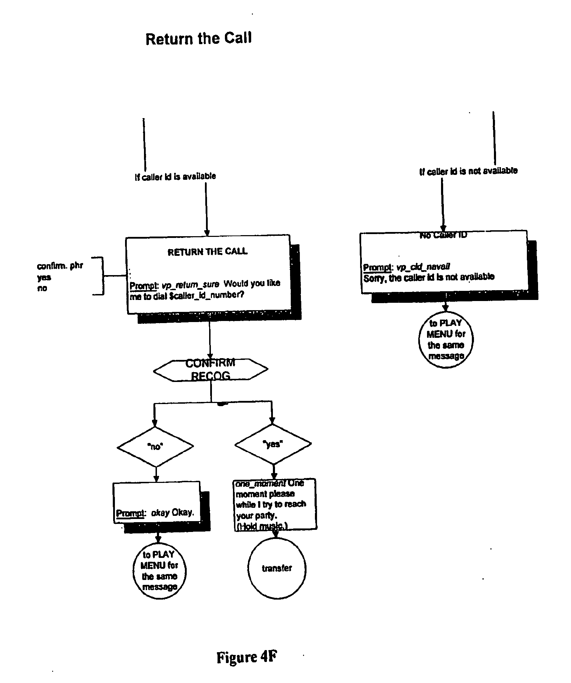

Figure 4F shows the Return a Call Menu which will attempt to use caller identification to return the call.

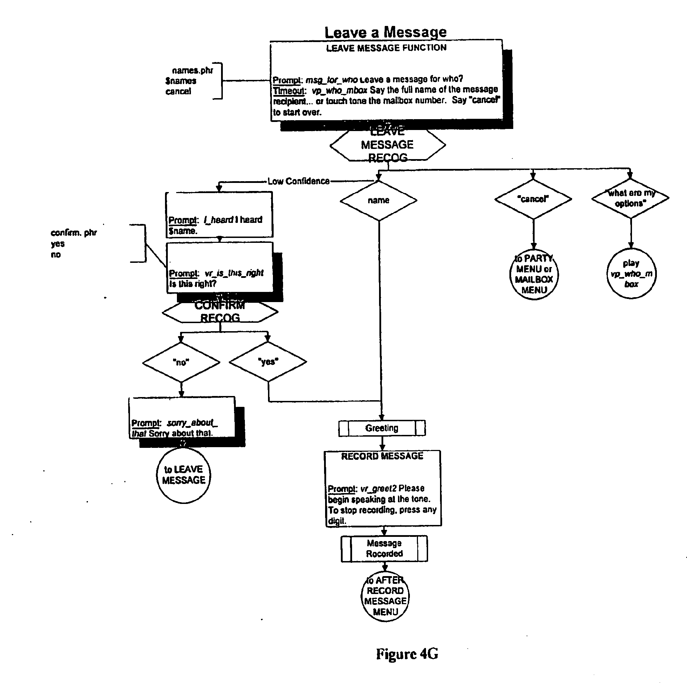

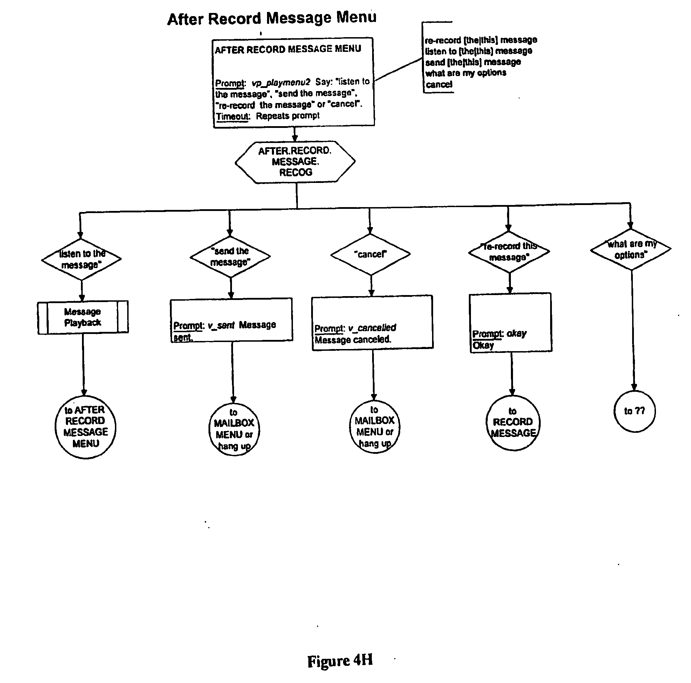

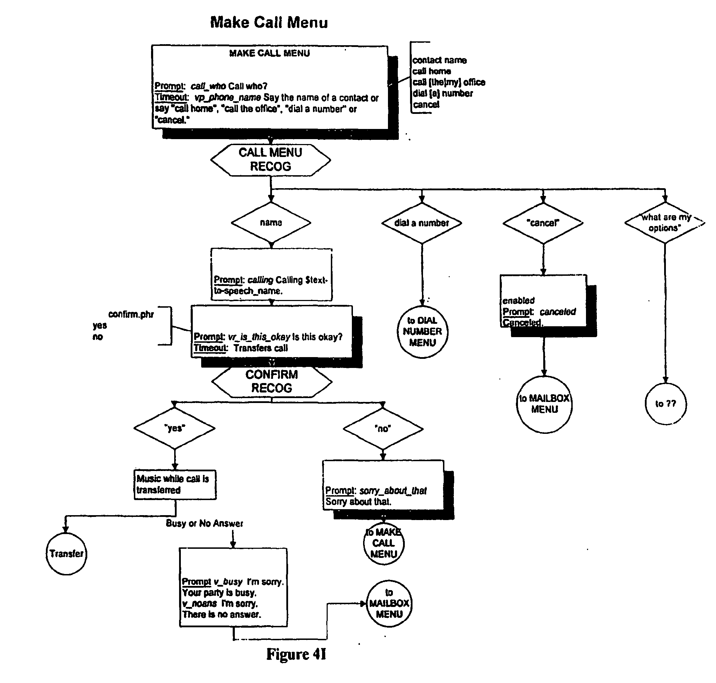

Figure 4G shows the Leave a Message Menu which allows the caller to leave a message to the intended party. Figure 4H shows the After Record Message Menu which allows the caller to listen to the message, re-record the message, send the message, or cancel the message. Figure 4I shows the Make Call Menu which allows the subscriber to dial a number, cancel, or attempt to obtain a contact and transfer to that contact.

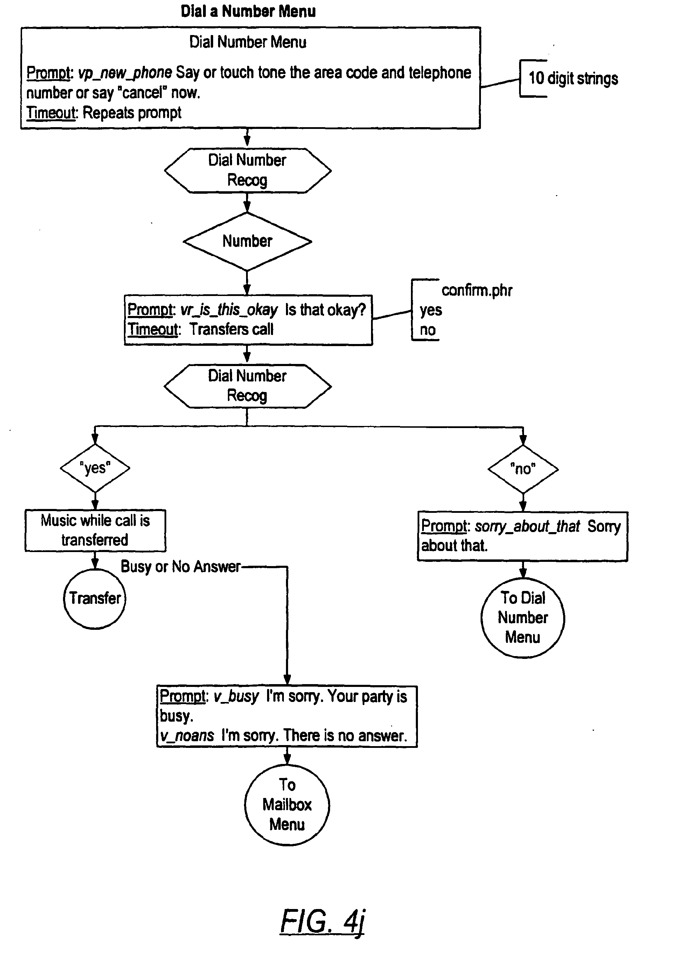

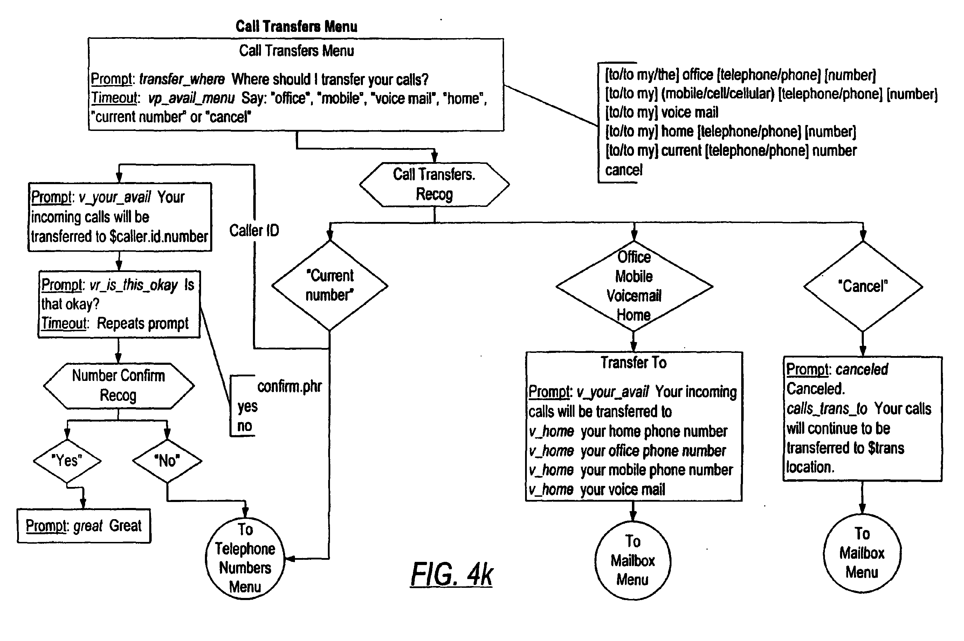

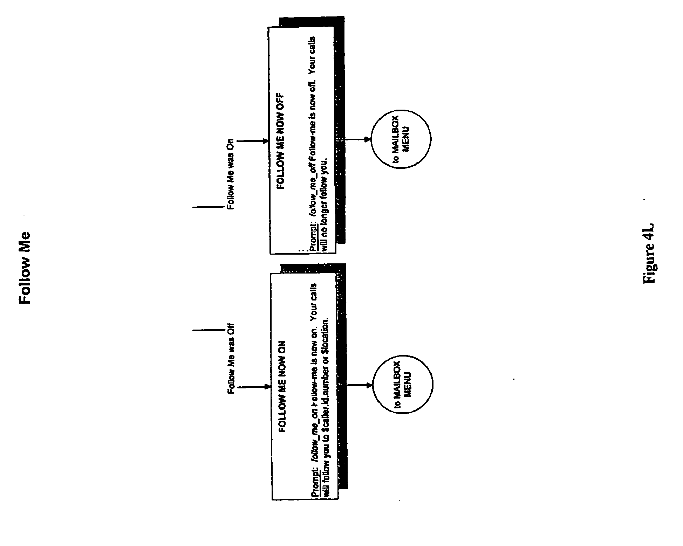

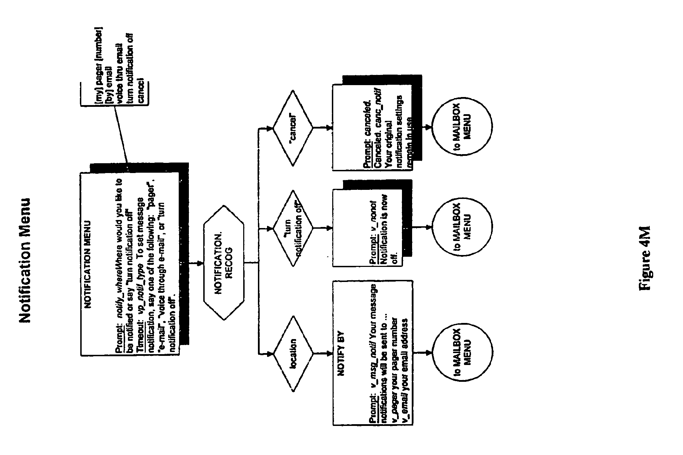

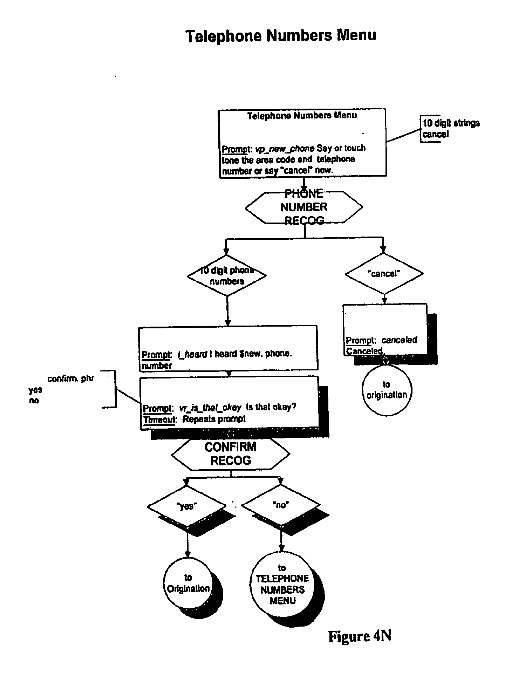

Figure 4J shows the Dial a Number Menu which allows the subscriber to dial a telephone number. Figure 4K is the Call Transfers Menu which allows the subscriber to transfer incoming calls to either his caller identification, a telephone number, or some other number of choice. Figure 4L is the Follow Me Menu which allows the subscriber to receive calls wherever he may be located. Figure 4M shows the Notification Menu which allows the subscriber to be notified either by pager or e-mail in certain situations. Figure 4N shows the Telephone Numbers Menu which allows the subscriber to dial a telephone number either by depressing the telephone keypad or speaking the number.

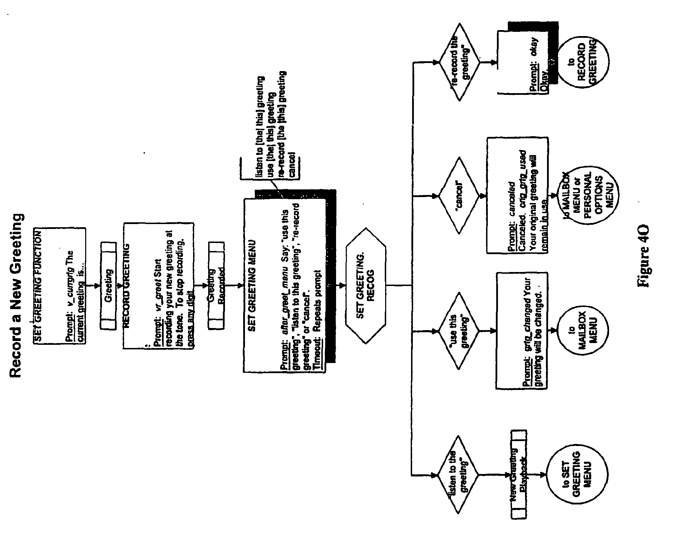

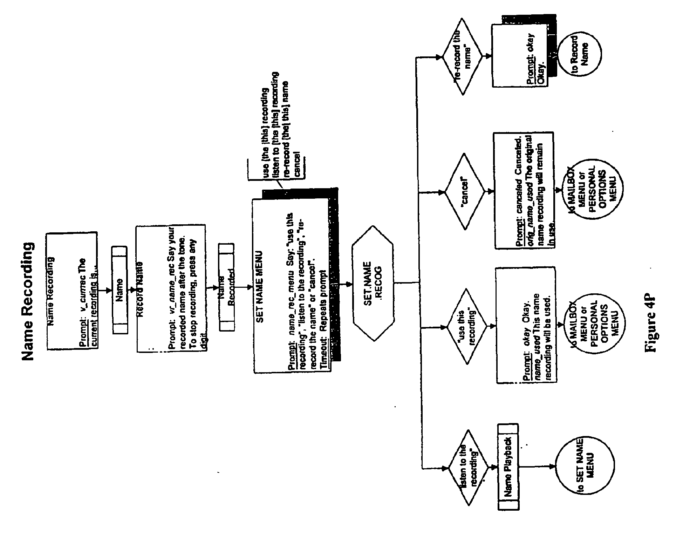

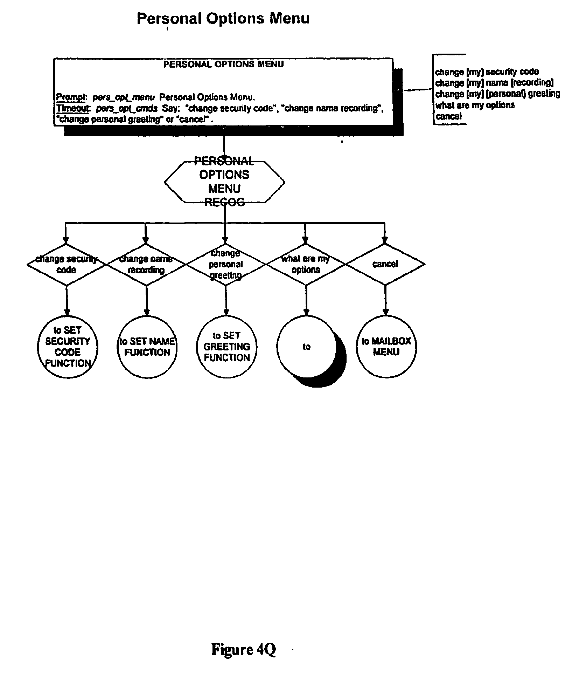

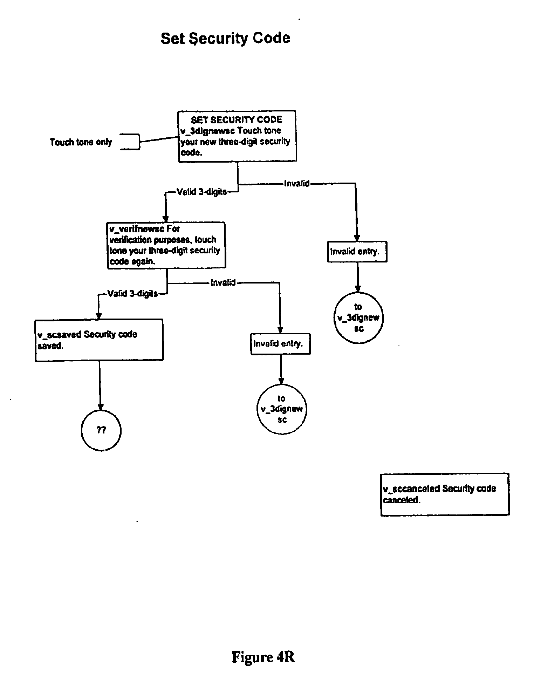

Figure 4O shows the Record a New Greeting Menu which allows the subscriber to record, listen, or re-record a greeting which a caller will hear upon reaching the subscriber. Figure 4P shows the Name Recording Menu which allows the subscriber to set a particular name in the system. Figure 4Q shows the Personal Options Menu which allows the subscriber to change the security code, the name recording, and the personal greeting. Figure 4R shows the Set Security Code Menu which allows the subscriber to set a new security code.

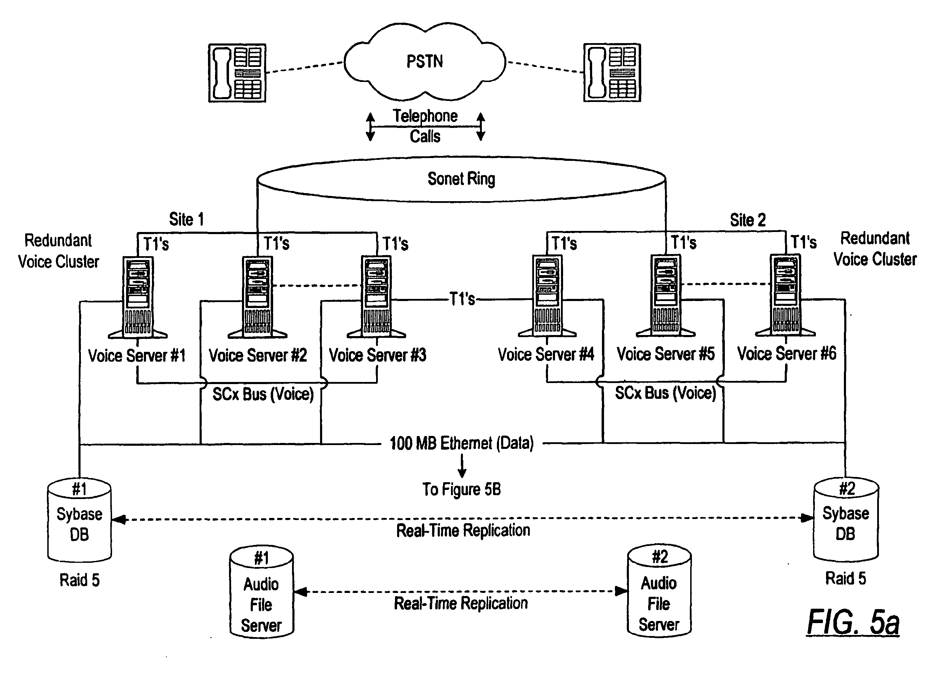

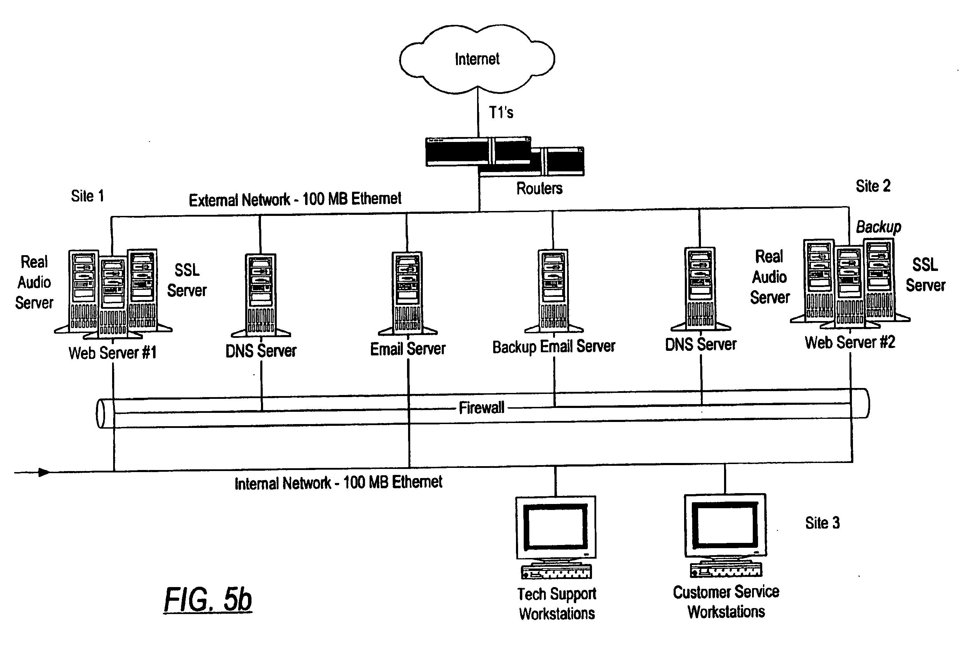

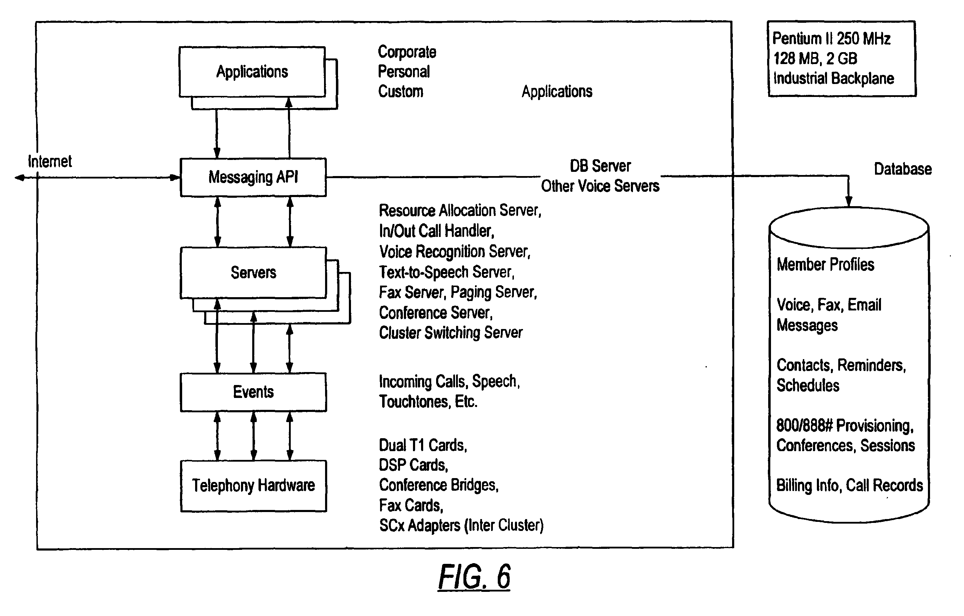

Figure 5A shows the computer telephony platform in accordance with Figure 1 in more detail. Figure 5B shows the network architecture in accordance with Figure 2 in more detail. Figure 6 shows the software architecture utilized in the present invention.

The system provides three ways for the subscriber to handle his communications. First and foremost is the voice recognition software using natural voice recognition (phonemes based), not pattern based as many of the current systems utilize. Therefore, the system does not have to be trained to identify your voice. Second, the subscriber may use the standard telephone touchtones. And third, the subscriber can utilize the internet to access a secure web site.

The system can act as a "follow me" service, capable of tracking you down whether you're at home, the office, airport, in a hotel room, in another office or in your car. The subscriber can configure the system to follow him, or the subscriber can disengage the follow me with a simple command. It also lets you know who is calling before you accept the call.

As for Web connections, you can boot up your computer, sign onto the internet, go through the system's secure web site and play your voice mails, read your email and faxes, manage your contacts and schedule conferences. The website thus becomes a unified messaging system. If you get a message from somebody who's not in your address book and you want to call him or her, you just go to the web site again and add a contact.

If you're on the secure website and you walk away, the system even times out after a few minutes so no one can sit at your computer and obtain your messages and contacts without your permission.

While on the system's web site, you'll be communicating over the internet via the Secure Socket Layer (SSL), a transport level technology (developed by Netscape) for authentication and data encryption between a Web server and a Web browser. SSL sends data over a "socket," a secure channel at the connection layer existing in most TCP/IP applications.

The system also utilizes text-to-speech so you can listen to your e-mail over the phone, or the subscriber can display his e-mail on his computer where he can reply to it and send e-mail to his contacts with audio (using audio attachments). Further, using Vosaic's internet audio program, the system can deliver voice mail via streaming audio over the internet using Java without a plug-in.

During a session on the web site, using text-to-speech, you could type in a name like "Harry Newton" and his phone number so that, when you eventually use the system the phone and you say, "call Harry Newton at the office," the system will recognize the name and dial the number you keyed in previously. Based on what you input now ("Harry Newton") is what the system utters later and compares the phonemes of what you input now to what you'll be speaking later.

The system also facilitates conference calls by allowing the subscriber two ways in which to set up a conference call. First, inbound conference calls can be set up for 32 people if you've registered a pre-scheduled meeting time. Subscribers call in to the system to get an assigned conference number. The conference participants then call in and asks to "join the conference". The system then asks for a conference number, which is entered via touchtones. All the parties are then connected and the conference begins.

Second, outbound conference calls can also be set up, even if you're "on the fly." Whether you're at your desk, at a hotel or even a phone booth, you can simply dial up and tell the system to "set up a conference call." Then you only have to dial up all the various parties to connect each of them to your conference.

The present invention is a compilation of hardware and software, including voice processing using Dialogic's SCSA extended bus and board-level resources, Purespeech speech recognition running on Dialogic Antares boards, and database management using Sybase System 10 and 11. Further, the system utilizes data networking, particularly TCP/IP and distributed systems, object oriented design and programming, multi-processing with Intel hardware, SCO UNIX and Solaris operation systems, Java and JavaScript languages, US and international long distance protocols, internet and web protocols, credit and payment processing, a help desk, customer service system, and network and service management.

For the voice and fax processing servers, the system relies on Dialogic hardware, including, voice boards, Antares cards (for speech recognition and fax) and digital switching cards. The system also uses the SCSA extended bus. The Purespeech ASR algorithms, which are used for speech recognition, run on the Antares cards plugged into the computers running the Solaris OS.

The system combines state-of-the-art speech recognition, computer and telephony technology. Along with the ability to recognize an extensive set of simple, intuitive, speaker-independent speech commands and respond by performing a wide variety of complex tasks. Each subscriber has their own secure Web page on which all the features can be accessed, allowing almost every aspect of the present invention to be maintained on-line.

Subscribers can use voice commands to (1) build, edit and manage their contact lists, (ii) review, play back, read, reply to and/or reroute voice mail and e-mail, (iii) schedule conference calls with 800 number access, and (iv) maintain an itemized calling log listing all calls with a running total of all charges.

The system also transfers calls as instructed or upon command will follow the subscriber according to predetermined contact numbers for office, home, cellular, pager or other designated locations. Every time a subscriber calls in, the system logs the originating number for the inbound call and then uses that number to re-contact the subscriber.

In accordance with the present invention, every subscriber or participant is given their own 800 number that is then used by all contacts calling in to the subscriber. The 800 number can also be used in scheduling conference calls for up to 32 participants on a given day and time. Each participant uses the 800 number and calls in to join the conference call, thereby effecting call conferencing for a fraction of the cost otherwise incurred.

Basically, the system provides a unified solution to the many varied communications and messaging devices used daily by mobile professionals and active consumers. with simple voice commands, subscribers can easily access and respond to all of their communications and messaging media in the same session.

The system takes inbound calls and contacts the subscriber, using call transfer or follow me features, and advises the subscriber of the call, the number of the calling party and/or the callers identity from the subscribers contact list. If the subscriber is on the telephone, the system will whisper the pending call information, giving the subscriber the option of taking the call or sending the caller into voice mail. The subscriber can also set priorities for certain calls which the system will follow, permitting selected calls to be put on call waiting, transferred or directed through call forwarding, while other calls are direct to voice mail messaging. Subscribers can conveniently make calls from their contact list by voice commands giving the, contacts name and, if applicable, the location to be called (i.e. "home," "office," "cellular," etc.)

Subscribers can access and play back their voice mail from any telephone or from their personal web page.

Voice mail messages can be saved, retrieved, deleted or rerouted to other individuals, groups or broadcast and voice responses can be returned immediately to the caller. Also, e-mail messages can be viewed on the subscriber's personal home page or the system will read the e-mail to the subscriber from any telephone using text-to-speech technology. Subscribers can immediately respond to e-mail with voice messages, marking, saving or deleting messages during the same session. E-mail messages can also be sent to any fax machine. Further, subscribers can immediately respond to faxes rather than waiting to retrieve copies and delay responses. Incoming faxes are received, the subscriber is notified of the arrival of the new fax, the fax can then be stored for later viewing and/or redirected to any fax machine or email address from the subscribers contact list or any other number. Subscribers can also be notified of any incoming communications and messages by pager, whether an inbound call, voice mail, e-mail or fax.

The system will automate conference calling and eliminate the need for conference call operators or complex, confusing PBX systems. The subscriber remains in control and can add or drop callers, mute the call and otherwise control all aspects of the conference call. By pre-scheduling conference calls by date and time, subscribers can notify participants, giving them an 800 number to call and join the conference. Up to 32 participants can be included in the present conference call feature.

The system further acts as an efficient secretary retaining complete contact logs of all call statistics. The subscriber maintains the contact list using simple voice or keyboard commands and can establish contact groups for broadcast communications and setting up conference calls. The contact database is easily accessible to all features.

The system includes a feature which enables subscribers to retrieve on demand or at predetermined intervals selected information from the internet or online service providers, allowing subscribers to establish "filter and forward" criteria specifying the type of information desired. A search engine will then retrieve the requested information, transmit the information to the system platform and notify the subscriber by page, telephone or other desired means. The system will provide direct access to news, weather, sports, financial, travel and other custom content directly from a computer or any telephone. The subscriber will then access the information by all available options, including text-to-speech capabilities.

The system provides long distance and international calling over the internet through the subscriber's personal home page, thereby significantly reducing the costs of long distance and international calling. The system further provides video conferencing features.

It is to be understood that the form of this invention is merely a preferred embodiment. various changes may be made in the function and arrangement of parts; equivalent means may be substituted for those illustrated and described; and certain features may be used independently from others without departing from the scope of the invention as defined in the following claims.

## Claims

1. A computer and telecommunications network for receiving, sending and managing information from a subscriber (36) to the network and from the network to the subscriber (36), comprising:
at least one cluster (10), said cluster (10) containing at least one voice server (12), said voice server (12) containing telephony and speech recognition; and
at least one database server (14), said database server (14) being connected to said cluster (10) and containing contact lists (46), and administrative data (42, 44, 48), such that said subscriber (36) can manipulate and manage (40) said data (42, 44, 48) and said contact lists (46);
**characterized by**:
said cluster (10) being accessible by said subscriber (36) via both a first standard telephone connection and a first internet connection;
a web server (16, 18), said web server (16, 18) being connected to said cluster (10) such that said subscriber (36) can access said network by connecting to said web server (16, 18) via said first internet connection;
said voice server (12) containing speaker-independent speech command recognition and execution functions for commands for setting up calls based on said contact lists (46) and administrative data (42, 44, 48) and for managing communications (26, 30, 34) and contact lists (46);
said network being capable of receiving a first message (26) from a second telephone connection and transmit said first message (26) to said subscriber (36), and said network being capable of receiving a second message from said subscriber (36) via said first telephone connection and transmit said second message via said second telephone connection based on commands received from said subscriber (36); and
said network being further capable of receiving said first message (26) from a second
internet connection and said second message via said first internet connection, to transmit a notification to said subscriber (36) about said first message (26) via said first telephone connection or said first internet connection, and to transmit said second message via said second internet connection, based on commands received from said subscriber (36).

2. The computer and telecommunications network described in claim 1, wherein said first message (26) and said second message comprises telephone calls, e-mail, faxes (30), conference calls (34) or voice-mail.

3. The computer and telecommunications network described in claim 1, wherein manipulating and managing said data (42, 44, 48) and said contact lists (46) comprises creating and modifying a contact list (46).

4. The computer and telecommunications network described in claim 3, wherein manipulating and managing said data (42, 44, 48) and said contact lists (46) comprises utilizing said contact lists (46) to place telephone calls, send e-mail, voice-mail and faxes, and create or modify conference calls.

5. The computer and telecommunications network of claim 1, wherein said subscriber (36) may issue commands to manipulate and manage (40) said contact lists (46) and administrative data (42, 44, 48).

6. The computer and telecommunications network of claim 5 wherein said commands are speech commands which are recognized by said speaker-independent speech command recognition of said at least one voice server (12) to respond.

7. The computer and telecommunications network of claim 1, wherein said commands received from said subscriber (36) are speech commands which are recognized by said speaker-independent speech command recognition of said at least one voice server (12) to respond.

8. The computer and telecommunications network of claim 7 wherein said speech commands are utilized to place telephone calls, create and send e-mail and voice-mail, and to create or modify conference calls.

9. The computer and telecommunications network of claim 1 wherein said speaker-independent speech command recognition of said at least one voice server (12) recognizes naturally spoken speech commands.

10. The computer and telecommunications network of claim 1 being accessible by said subscriber (36) via a cellular phone, a pager, a computer, a fax machine, an electronic mailbox or a voice-mail service.

11. The computer and telecommunications network of claim 1, wherein said voice server (12) further comprising at least one of text-to-speech or telephone conferencing functions.

12. A method for receiving, sending and managing information between a computer and telecommunications network and a subscriber (36) comprising the steps of:
providing at least one cluster (10), said cluster (10) containing at least one voice server (12), said voice server (12) containing telephony and speech recognition; and
providing at least one database server (14), said database server (14) being connected to said cluster (10) and containing contact lists (46), and administrative data (42, 44, 48), such that said subscriber (36) can manipulate and manage (40) said data (42, 44, 48) and said contact lists (46);
**characterized by**
said subscriber (36) being able to access said cluster (10) via both a first standard telephone
connection and a first internet connection;
providing a web server (16, 18), said web server (16, 18) being connected to said cluster (10) such that said subscriber (36) can access said network by connecting to said web server (16, 18) via said first internet connection;
receiving a message (26) either from a second telephone connection or a second internet connection;
transmitting said message to said subscriber (36) or transmitting a notification to said subscriber (36) about said message, via said first telephone connection or said first internet connection, based on commands received by the network from said subscriber (36); and
said voice server (12) containing speaker-independent speech command recognition and execution functions for commands for setting up calls based on said contact lists (46) and administrative data (42, 44, 48) and managing communications (26, 30, 34) and contact lists (46).

13. A method for receiving, sending and managing information between a computer and telecommunications network and a subscriber (36) comprising the steps of:
providing at least one cluster (10), said cluster (10) containing at least one voice server (12), said voice server (12) containing telephony and speech recognition;
providing at least one database server (14), said database server (14) being connected to said cluster (10) and containing contact lists (46), and administrative data (42, 44, 48), such that said subscriber (36) can manipulate and manage (40) said data (42, 44, 48) and said contact lists (46); and
receiving a message from said subscriber (36) and transmitting said message based on commands received by said network from said subscriber (36);
**characterized by:**
said subscriber (36) being able to access said cluster (10) via both a first standard telephone connection and a first internet connection;
providing a web server (16, 18), said web server (16, 18) being connected to said cluster (10) such that said subscriber (36) can access said network by connecting to said web server (16, 18) via said first internet connection;
said voice server (12) containing speaker-independent speech command recognition and execution functions for commands for setting up calls based on said contact lists (46) and administrative data (42, 44, 48) and managing communications (26, 30, 34) and contact lists (46);
said receiving step receiving said message from said subscriber (36) either via said first telephone connection or said first internet connection; and
said transmitting step alternatively transmitting said message either via a second telephone connection or a second internet connection.

14. The method of claim 12 or 13, wherein said message comprises telephone calls, e-mail, faxes (30), conference calls (34) or voice-mail.

15. The method of claim 12 or 13, wherein manipulating and managing (40) said data (42, 44, 48) and said contact lists (46) comprises creating and modifying a contact list (46).

16. The method of claim 15, wherein manipulating and managing (40) said data (42, 44, 48) and said contact lists (46) comprises utilizing said contact list (46) to place telephone calls, send e-mail, voice-mail and faxes, and create or modify conference calls.

17. The method of claim 12, comprising the additional step of issuing commands from said subscriber (36) for manipulating and managing said contact lists (46) and administrative data (42, 44, 48).

18. The method of claim 17 wherein said step of issuing commands comprises issuing speech commands spoken by said subscriber (36).

19. The method of claim 12 or 13, wherein said commands received by said network from said subscriber (36) are speech commands; and the method further comprising the steps of
recognizing said speech commands by said speaker-independent speech command recognition of said at least one voice server and responding.

20. The method of claim 19 further comprising the steps of placing telephone calls, creating and sending e-mail and voice-mail, and creating and modifying conference calls based upon said speech commands.

21. The method of claim 12 or 13 comprising the further step of recognizing naturally spoken speech commands using said speaker-independent speech command recognition.

22. The method of claim 12 or 13 wherein said subscriber (36) accessing said network via a cellular phone, a pager, a computer, a fax machine, an electronic mailbox or a voice-mail service.

23. The method of claim 12 or 13, wherein said voice server (12) further comprising at least one of text-to-speech or telephone conferencing functions.

## Patentansprüche

1. Computer- und Telekommunikationsnetz zum Empfangen, Senden und Managen von Informationen von einem Teilnehmer (36) an das Netz und von dem Netz an den Teilnehmer (36), umfassend:
wenigstens einen Cluster (10), wobei der Cluster (10) wenigstens einen Sprachserver (12) enthält, wobei der Sprachserver (12) Telefonie und Spracherkennung enthält; und
wenigstens einen Datenbankserver (14), wobei der Datenbankserver (14) mit dem Cluster (10) verbunden ist, und Kontaktlisten (46) und administrative Daten (42, 44, 48) enthält, so dass der Teilnehmer (36) diese Daten (42, 44, 48) und die Kontaktlisten (46) manipulieren und managen (40) kann;
**dadurch gekennzeichnet, dass**
der Teilnehmer (36) sowohl über eine erste herkömmliche Telefonverbindung als auch über eine erste Internetverbindung auf den Cluster (10) zugreifen kann;
durch einen Webserver (16, 18), wobei der Webserver (16, 18) mit dem Cluster (10) verbunden ist, so dass der Teilnehmer (36) auf das Netz durch Verbinden mit dem Webserver (16, 18) über die erste Internetverbindung zugreifen kann;
wobei der Sprachserver (12) sprecherunabhängige Sprachkommandoerkennungs- und Ausführungsfunktionen für Kommandos zum Aufbau von Rufverbindungen basierend auf den Kontaktlisten (46) und administrativen Daten (42, 44, 48) und zum Managen von Kommunikationen (26, 30, 34) und Kontaktlisten (46) enthält;
das Netz in der Lage ist, eine erste Nachricht (26) von einer zweiten Telefonverbindung zu empfangen und diese erste Nachricht (26) an den Teilnehmer (36) zu übermitteln, und das Netz in der Lage ist, eine zweite Nachricht von dem Teilnehmer (36) über die erste Telefonverbindung zu empfangen, und diese zweite Nachricht über die zweite Telefonverbindung basierend auf von dem Teilnehmer (36) empfangenen Kommandos zu übertragen; und
das Netz weiterhin in der Lage ist, die erste Nachricht (26) von einer zweiten Internetverbindung und die zweite Nachricht über die erste Internetverbindung zu empfangen, eine Benachrichtigung an den Teilnehmer (36) über die erste Nachricht (26) über die erste Telefonverbindung oder die erste Internetverbindung zu übermitteln und die zweite Nachricht über die zweite Internetverbindung, basierend auf von dem Teilnehmer (36) empfangenen Kommandos zu übertragen.

2. Computer- und Telekommunikationsnetz nach Anspruch 1, wobei die erste Nachricht (26) und die zweite Nachricht Telefonanrufe, Email, Faxe (30), Sammelrufe (34) oder Sprachpost umfassen.

3. Computer- und Telekommunikationsnetz nach Anspruch 1, wobei das Manipulieren und Managen der Daten (42, 44, 48) und der Kontaktlisten (46) das Erzeugen und Modifizieren einer Kontaktliste (46) umfasst.

4. Computer- und Telekommunikationsnetz nach Anspruch 3, wobei das Manipulieren und Managen der Daten (42, 44, 48) und der Kontaktlisten (46) das Benutzen der Kontaktlisten (46) zum Initiieren von Telefonanrufen, Senden von Email, Sprachpost und Faxen und das Erzeugen oder Modifizieren von Sammelrufen umfasst.

5. Computer- und Telekommunikationsnetz nach Anspruch 1, wobei der Teilnehmer (36) Kommandos zum Manipulieren und Managen (40) der Kontaktlisten (46) und administrativen Daten (42, 44, 48) ausgeben kann.

6. Computer- und Telekommunikationsnetz nach Anspruch 5, wobei die Kommandos Sprachkommandos sind, die durch die sprecherunabhängige Sprachkommandoerkennung des wenigstens einen Sprachservers (12) als zu beantworten erkannt werden.

7. Computer- und Telekommunikationsnetz nach Anspruch 1, wobei die von dem Teilnehmer (36) empfangenen Kommandos Sprachkommandos sind, die durch die sprecherunabhängige Sprachkommandoerkennung des wenigstens einen Sprachservers (12) als zu beantworten erkannt werden.

8. Computer- und Telekommunikationsnetz nach Anspruch 7, wobei die Sprachkommandos verwendet werden, Telefonanrufe zu initiieren, Email und Sprachpost zu erzeugen und zu versenden, und Sammelrufe zu erzeugen oder zu modifizieren.

9. Computer- und Telekommunikationsnetz nach Anspruch 1, wobei die sprecherunabhängige Sprachkommandoerkennung des wenigstens einen Sprachservers (12) natürlich gesprochene Sprachkommandos erkennt.

10. Computer- und Telekommunikationsnetz nach Anspruch 1, auf das der Teilnehmer (36) über ein Handy, einen Pager, einen Computer, ein Faxgerät, eine elektronische Mailbox oder einen Sprachpostdienst zugreifen kann.

11. Computer- und Telekommunikationsnetz nach Anspruch 1, wobei der Sprachserver (12) weiterhin wenigstens Text-in-Sprache- oder Telefonkonferenz-Funktion umfasst.

12. Verfahren zum Empfangen, Senden und Managen von Informationen zwischen einem Computer- und Telekommunikationsnetz und einem Teilnehmer (36), umfassend die Schritte:
Bereitstellen wenigstens eines Clusters (10), wobei der Cluster (10) wenigstens einen Sprachserver (12) enthält, wobei der Sprachserver (12) Telefonie und Spracherkennung enthält; und
Bereitstellen wenigstens eines Datenbankservers (14), wobei der Datenbankserver (14) mit dem Cluster (10) verbunden ist und Kontaktlisten (46) und administrative Daten (42, 44, 48) enthält, so dass der Teilnehmer (36) diese Daten (42, 44, 48) und die Kontaktlisten (46) manipulieren und managen (40) kann;
**dadurch gekennzeichnet, dass**
der Teilnehmer (36) in der Lage ist, auf den Cluster (10) sowohl über eine erste herkömmliche Telefonverbindung als auch eine erste Internetverbindung zuzugreifen;
durch Bereitstellen eines Webservers (16, 18), wobei der Webserver (16, 18) mit dem Cluster (10) verbunden ist, so dass der Teilnehmer (36) auf das Netz durch
Verbinden mit dem Webserver (16, 18) über die erste Internetverbindung zugreifen kann;
Empfangen einer Nachricht (26) entweder von einer zweiten Telefonverbindung oder
einer zweiten Internetverbindung;
Übermitteln der Nachricht an den Teilnehmer (36) oder Übermitteln einer Benachrichtigung an den Teilnehmer (36) über die Nachricht, über die erste Telefonverbindung oder die erste Internetverbindung, basierend auf Kommandos, die das Netz von dem Teilnehmer (36) erhalten hat; und
wobei der Sprachserver (12) sprecherunabhängige Sprachkommandoerkennungs- und Ausführungsfunktionen für Kommandos zum Aufbau von Rufverbindungen basierend auf den Kontaktlisten (46) und administrativen Daten (42, 44, 48) und zum Managen von Kommunikationen (26, 30, 34) und Kontaktlisten (46) enthält.

13. Verfahren zum Empfangen, Senden und Managen von Informationen zwischen einem Computer- und Telekommunikationsnetz und einem Teilnehmer (36), umfassend die Schritte:
Bereitstellen wenigstens eines Clusters (10), wobei der Cluster (10) wenigstens einen Sprachserver (12) enthält, wobei der Sprachserver (12) Telefonie und Spracherkennung enthält;
Bereitstellen wenigstens eines Datenbankservers (14), wobei der Datenbankserver (14) mit dem Cluster (10) verbunden ist und Kontaktlisten (46) und administrative Daten (42, 44, 48) enthält, so dass der Teilnehmer (36) diese Daten (42, 44, 48) und die Kontaktlisten (46) manipulieren und managen (40) kann; und
Empfangen einer Nachricht von dem Teilnehmer (36) und Übertragen der Nachricht basierend auf Kommandos, die das Netz von dem Teilnehmer (36) erhalten hat;
**dadurch gekennzeichnet, dass**
der Teilnehmer (36) in der Lage ist, auf den Cluster (10) sowohl über eine erste herkömmliche Telefonverbindung als auch eine erste Internetverbindung zuzugreifen;
durch Bereitstellen eines Webservers (16, 18), wobei der Webserver (16, 18) mit dem Cluster (10) verbunden ist, so dass der Teilnehmer (36) auf das Netz durch Verbinden mit dem Webserver (16, 18) über die erste Internetverbindung zugreifen kann;
der Sprachserver (12) sprecherunabhängige Sprachkommandoerkennungs- und Ausführungsfunktionen für Kommandos zum Aufbau von Rufverbindungen, basierend auf den Kontaktlisten (46) und administrativen Daten (42, 44, 48) und zum Managen von Kommunikationen (26, 30, 34) und Kontaktlisten (46) enthält;
der Schritt des Empfangens die Nachricht von dem Teilnehmer (36) entweder über die erste Telefonverbindung oder die erste Internetverbindung empfängt; und
der Schritt des Übertragens alternativ die Nachricht entweder über eine zweite Internetverbindung oder eine zweite Telefonverbindung überträgt.

14. Verfahren nach Anspruch 12 oder 13, wobei die Nachricht Telefonanrufe, Email, Faxe (30), Sammelanrufe (34) oder Sprachpost umfasst.

15. Verfahren nach Anspruch 12 oder 13, wobei das Manipulieren und Managen (40) der Daten (42, 44, 48) und der Kontaktlisten (46) das Erzeugen und Modifizieren einer Kontaktliste (46) umfasst.

16. Verfahren nach Anspruch 15, wobei das Manipulieren und Managen (40) der Daten (42, 44, 48) und der Kontaktlisten (46) das Benutzen der Kontaktliste (46) zum Initiieren von Telefonanrufen, Versenden von Email, Sprachpost und Faxen, und Erzeugen oder Modifizieren von Sammelrufen umfasst.

17. Verfahren nach Anspruch 12, umfassend den zusätzlichen Schritt des Ausgebens von Kommandos des Teilnehmers (36) zum Manipulieren und Managen der Kontaktlisten (46) und administrativen Daten (42, 44, 48).

18. Verfahren nach Anspruch 17, wobei der Schritt des Ausgebens von Kommandos das Ausgeben von durch den Teilnehmer (36) gesprochenen Sprachkommandos umfasst.

19. Verfahren nach Anspruch 12 oder 13, wobei die durch das Netz von dem Teilnehmer (36) empfangenen Kommandos Sprachkommandos sind und das Verfahren weiterhin die Schritte umfasst:
Erkennen der Sprachkommandos durch die sprecherunabhängige Sprachkommandoerkennung des wenigstens einen Sprachservers und Beantworten.

20. Verfahren nach Anspruch 19, weiterhin umfassend die Schritte des Initiieren von Telefonanrufen, Erzeugens und Versendens von Email und Sprachpost, und Erzeugens und Modifizierens von Sammelrufen basierend auf den Sprachkommandos.

21. Verfahren nach Anspruch 12 oder 13 umfassend den weiteren Schritt des Erkennens natürlich gesprochener Sprachkommandos unter Benutzer der sprecherunabhängigen Sprachkommandoerkennung.

22. Verfahren nach Anspruch 12 oder 13, wobei der Teilnehmer (36) auf das Netz über ein Handy, einen Pager, einen Computer, ein Faxgerät, eine elektronische Mailbox oder einen Sprachpostdienst zugreift.

23. Verfahren nach Anspruch 12 oder 13, wobei der Sprachserver (12) weiterhin wenigstens Text-in-Sprache- oder Telefonkonferenz-Funktion umfasst.

## Revendications

1. Réseau informatique et de télécommunications pour recevoir, envoyer et gérer des informations d'un abonné (36) vers le réseau et du réseau vers l'abonné (36), comprenant ;
au moins une grappe (10) ladite grappe (10) contenant au moins un serveur vocal (12), ledit serveur vocal (12) contenant la téléphonie et la reconnaissance vocale ; et
au moins un serveur de base de données (14), ledit serveur de base de données (14) étant connecté à ladite grappe (10) et contenant des listes de contacts (46), et des données administratives (42, 44, 48), de sorte que ledit abonné (36) puisse manipuler et gérer (40) lesdites données (42, 44, 48) et lesdites listes de contacts (46) ;
**caractérisé par** :
ladite grappe (10) étant accessible par ledit abonné (36) via une première connexion téléphonique standard et une première connexion Internet ;
un serveur Web (16, 18), ledit serveur Web (16, 18) étant connecté à ladite grappe (10) de sorte que ledit abonné (36) puisse accéder audit réseau par connexion audit serveur Web (16, 18) via ladite première connexion Internet ;
ledit serveur vocal (12) contenant des fonctions de reconnaissance et d'exécution de commande vocale indépendante de l'orateur pour des commandes pour passer des appels basées sur lesdites listes de
contacts (46) et données administratives (42, 44, 48) et pour gérer des communications (26, 30, 34) et des listes de contacts (46) ;
ledit réseau étant capable de recevoir un premier message (26) depuis une deuxième connexion téléphonique et de transmettre ledit premier message (26) audit abonné (36) et ledit réseau étant capable de recevoir un deuxième message depuis ledit abonné (36) via ladite première connexion téléphonique et de transmettre ledit deuxième message via ladite deuxième connexion téléphonique sur la base des commandes reçues depuis ledit abonné (36) ; et
ledit réseau étant en outre capable de recevoir ledit premier message (26) depuis une deuxième connexion Internet et ledit deuxième message via ladite première connexion Internet, pour transmettre une notification audit abonné (36) concernant ledit premier message (26) via ladite première connexion téléphonique ou ladite première connexion Internet, et pour transmettre ledit deuxième message via ladite deuxième connexion Internet, sur la base des commandes reçues depuis ledit abonné (36).

2. Réseau informatique et de télécommunications décrit dans la revendication 1, dans lequel ledit premier message (26) et ledit deuxième message comprennent des appels téléphoniques, des courriels, des télécopies (30), des conférences téléphoniques (34) ou un message vocal.

3. Réseau informatique et de télécommunications décrit dans la revendication 1, dans lequel la manipulation et la gestion desdites données (42, 44, 48) et desdites listes de contacts (46) comprennent la création et la modification d'une liste de contacts (46).

4. Réseau informatique et de télécommunications décrit dans la revendication 3, dans lequel la manipulation et la gestion desdites données (42, 44, 48) et desdites listes de contacts (46) comprennent l'utilisation desdites listes de contacts (46) pour passer des appels téléphoniques, envoyer un courriel, un message vocal et des télécopies, et créer ou modifier des conférences téléphoniques.

5. Réseau informatique et de télécommunications selon la revendication 1, dans lequel ledit abonné (36) peut émettre des commandes pour manipuler et gérer (40) lesdites listes de contacts (46) et données administratives (42, 44, 48).

6. Réseau informatique et de télécommunications selon la revendication 5, dans lequel lesdites commandes sont des commandes vocales qui sont reconnues par ladite reconnaissance de commande vocale indépendante de l'orateur dudit au moins un serveur vocal (12) pour répondre.

7. Réseau informatique et de télécommunications selon la revendication 1, dans lequel lesdites commandes reçues depuis ledit abonné (36) sont des commandes vocales qui sont reconnues par ladite reconnaissance de commande vocale indépendante de l'orateur dudit au moins un serveur vocal (12) pour répondre.

8. Réseau informatique et de télécommunications selon la revendication 7, dans lequel lesdites commandes vocales sont utilisées pour passer des appels téléphoniques, créer et envoyer un courriel et un message vocal, et créer ou modifier des conférences téléphoniques.

9. Réseau informatique et de télécommunications selon la revendication 1, dans lequel ladite reconnaissance de commande vocale indépendante de l'orateur dudit au moins un serveur vocal (12) reconnaît des commandes vocales énoncées naturellement.

10. Réseau informatique et de télécommunications selon la revendication 1 étant accessible par ledit abonné (36) via un téléphone cellulaire, un téléavertisseur, un ordinateur, un télécopieur, une boîte aux lettres électronique ou un service de messagerie vocale.

11. Réseau informatique et de télécommunications selon la revendication 1, dans lequel ledit serveur vocal (12) comprend en outre au moins l'une parmi des fonctions de synthèse vocale ou de conférence téléphonique.

12. Procédé pour recevoir, envoyer et gérer des informations entre un réseau informatique et de télécommunications et un abonné (36) comprenant les étapes consistant à :
produire au moins une grappe (10), ladite grappe (10) contenant au moins un serveur vocal (12), ledit serveur vocal (12) contenant la téléphonie et la reconnaissance vocale ; et
produire au moins un serveur de base de données (14), ledit serveur de base de données (14) étant connecté à ladite grappe (10) et contenant des listes de contacts (46), et des données administratives (42, 44, 48), de sorte que ledit abonné (36) puisse manipuler et gérer (40) lesdites données (42, 44, 46) et lesdites listes de contacts (46) ;
**caractérisé par**
ledit abonné (36) pouvant accéder à ladite grappe (10) via une première connexion téléphonique standard et une première connexion Internet ;
produire un serveur Web (16, 18), ledit serveur Web (16, 18) étant connecté à ladite grappe (10) de sorte que ledit abonné (36) puisse accéder audit réseau par connexion audit serveur Web (16, 18) via ladite première connexion Internet ;
recevoir un message (26) depuis une deuxième connexion téléphonique ou une deuxième connexion Internet ;
transmettre ledit message audit abonné (36) ou transmettre une notification audit abonné (36) concernant ledit message, via ladite première connexion téléphonique ou ladite première connexion Internet, sur la base de commandes reçues par le réseau depuis ledit abonné (36) ; et
ledit serveur vocal (12) contenant des fonctions de reconnaissance et d'exécution de commande vocale indépendante de l'orateur pour des commandes pour passer des appels basées sur lesdites listes de contacts (46) et données administratives (42, 44, 48) et pour gérer les communications (26, 30, 34) et les listes de contacts (46).

13. Procédé pour recevoir, envoyer et gérer des informations entre un réseau informatique et de télécommunications et un abonné (36) comprenant les étapes consistant à :
produire au moins une grappe (10), ladite grappe (10) contenant au moins un serveur vocal (12), ledit serveur vocal (12) contenant la téléphonie et la reconnaissance vocale ;
produire au moins un serveur de base de données (14), ledit serveur de base de données (14) étant connecté à ladite grappe (10) et contenant des listes de contacts (46), et des données administratives (42, 44, 48), de sorte que ledit abonné (36) puisse manipuler et gérer (40) lesdites données (42, 44, 48) et lesdites listes de contacts (46) ; et
recevoir un message depuis ledit abonné (36) et transmettre ledit message sur la base de commandes reçues par ledit réseau depuis ledit abonné (36) ;
**caractérisé par**
ledit abonné (36) pouvant accéder à ladite grappe (10) via une première connexion téléphonique standard et une première connexion Internet ;
produire un serveur Web (16, 18), ledit serveur Web (16, 18) étant connecté à ladite grappe (10) de sorte que ledit abonné (36) puisse accéder audit réseau par connexion audit serveur Web (16, 18) via ladite première connexion Internet ;
ledit serveur vocal (12) contenant des fonctions de reconnaissance et d'exécution de commande vocale indépendante de l'orateur pour des commandes pour passer des appels basées sur lesdites listes de contacts (46) et données administratives (42, 44, 48) et pour gérer les communications (26, 30, 34) et les listes de contacts (46) ;
ladite étape de réception recevant ledit message depuis ledit abonné (36) via ladite première connexion téléphonique ou ladite première connexion Internet ; et
ladite étape de transmission, transmettant ledit message via une deuxième connexion téléphonique ou une deuxième connexion Internet.

14. Procédé selon la revendication 12 ou 13, dans lequel ledit message comprend des appels téléphoniques, des courriels, des télécopies (30), des conférences téléphoniques (34) ou des messages vocaux.

15. Procédé selon la revendication 12 ou 13, dans lequel la manipulation et la gestion (40) desdites données (42, 44, 48) et desdites listes de contacts (46) comprennent la création et la modification d'une liste de contacts (46).

16. Procédé selon la revendication 15, dans lequel la manipulation et la gestion (40) desdites données (42, 44, 48) et desdites listes de contacts (46) comprennent l'utilisation de ladite liste de contacts (46) pour passer des appels téléphoniques, envoyer un courriel, un message vocal et des télécopies, et créer ou modifier des conférences téléphoniques.

17. Procédé selon la revendication 12 comprenant l'étape additionnelle d'émission de commandes depuis ledit abonné (36) pour manipuler et gérer lesdites listes de contacts (46) et données administratives (42, 44, 48).

18. Procédé selon la revendication 17, dans lequel ladite étape d'émission de commandes comprend l'émission de commandes vocales énoncées par ledit abonné (36).

19. Procédé selon la revendication 12 ou 13, dans lequel lesdites commandes reçues par ledit réseau depuis ledit abonné (36) sont des commandes vocales ; et le procédé comprend en outre les étapes consistant à
reconnaître lesdites commandes vocales par ladite reconnaissance de commande vocale indépendante de l'orateur dudit au moins un serveur vocal et répondre.

20. Procédé selon la revendication 19 comprenant en outre les étapes consistant à passer des appels téléphoniques, créer et envoyer un courriel et un message vocal, et créer et modifier des conférences téléphoniques sur la base desdites commandes vocales.

21. Procédé selon la revendication 12 ou 13 comprenant l'étape supplémentaire consistant à reconnaître des commandes vocales énoncées naturellement en utilisant ladite reconnaissance de commande vocale indépendante de l'orateur.

22. Procédé selon la revendication 12 ou 13, dans lequel ledit abonné (36) accède audit réseau par l'intermédiaire d'un téléphone cellulaire, un téléavertisseur, un ordinateur, un télécopieur, une boîte aux lettres électronique ou un service de messagerie vocale.

23. Procédé selon la revendication 12 ou 13, dans lequel ledit serveur vocal (12) comprend en outre au moins l'une parmi des fonctions de synthèse vocale ou de conférence téléphonique.
